# EUROPEAN PATENT SPECIFICATION

(11) **EP 3 705 707 B1**
(45) Date of publication and mention of the grant of the patent: **26.07.2023**
(21) Application number: 20160120.0
(22) Date of filing: 28.02.2020
(51) Int. Cl.: F02D 19/02, F02D 41/00, F01N 3/10, F02D 41/02, F02D 41/14, F01N 9/00, F02D 41/22, F02D 41/24

(54) **METHOD AND ASSEMBLY FOR CONTROLLING FUEL SUPPLY FOR A SPARK IGNITION INTERNAL COMBUSTION ENGINE, IN PARTICULAR FOR A NATURAL GAS FUELED ENGINE**
VERFAHREN UND ANORDNUNG ZUR STEUERUNG DER BRENNSTOFFZUFUHR EINER FREMDGEZÜNDETEN BRENNKRAFTMASCHINE, INSBESONDERE FÜR EINEN ERDGASBETRIEBENEN MOTOR
PROCÉDÉ ET ENSEMBLE PERMETTANT DE RÉGULER L'ALIMENTATION EN CARBURANT DANS UN MOTEUR À COMBUSTION INTERNE À ALLUMAGE PAR ÉTINCELLES, EN PARTICULIER POUR UN MOTEUR À GAZ NATUREL

(30) Priority: 06.03.2019 IT 201900003269
(43) Date of publication of application: 09.09.2020
(73) Proprietor: FPT Motorenforschung AG, 9320 Arbon (CH)
(72) Inventor: GIANELLA, Matteo, 9000 ST. GALLEN (CH); CAGNAZZO, Emanuele, 10099 SAN MAURO TORINESE (TO) (IT)
(74) Representative: Lovino, Paolo

(56) References cited:
- EP-A2- 1 715 165
- FR-A1- 2 757 634
- US-A- 5 901 552
- US-A1- 2002 078 683
- US-A1- 2004 045 282
- US-A1- 2005 028 517
- US-A1- 2015 240 733
- MICHAEL TOMFORDE ET AL: "A Post-Catalyst Control Strategy Based on Oxygen Storage Dynamics", SAE TECHNICAL PAPER SERIES, vol. 1, 16 April 2013 (2013-04-16), XP055634421, US ISSN: 0148-7191, DOI: 10.4271/2013-01-0352

## Description

### CROSS-REFERENCE TO RELATED APPLICATIONS

This patent application claims priority from Italian patent application no. 102019000003269 filed on 06/03/2019.

### TECHNICAL FIELD

The present invention concerns a method for controlling fuel supply for a spark ignition internal combustion engine, in particular for a natural gas fueled engine.

### BACKGROUND OF THE INVENTION

As it is known, spark ignition internal combustion engines are provided with an exhaust after-treatment system usually having a three-way catalyst (TWC). The latter is able either to oxidize carbon oxides (CO) and hydrocarbon residues (HC) or to reduce nitrogen oxides (NOx), when the engine operates within a small range of the air/fuel ratio around the stoichiometric condition.

Deviations of the air/fuel ratio from this small range can lead to a huge and fast degradation in the pollutants conversion efficiencies. In other words, if the air/fuel mixture supplied into the engine is too lean, NOx conversion drops; on the other hand, if it is too rich, the CO and HC conversion drops and ammonia (NH3) is also produced in the catalyst. Therefore, the control of this system is quite challenging, especially because of the high sensitivity to small deviations in the air/fuel ratio, that naturally occur during the operating conditions.

Besides, the pollutants conversion performed in the catalyst does not only depend on the instantaneous air/fuel ratio, but also on other parameters (e.g. temperature, oxidation level, etc.). An ideal control strategy should be able to stabilize the conditions of catalyst around its optimal condition, and to reach this optimal condition as fast as possible when external disturbances occur (e.g. transients, fuel cut-offs, misfires, etc.).

Examples of model-based control strategies have been proposed to obtain the stoichiometric operating condition in gasoline fueled engines. However, such known strategies are not satisfactory in natural gas fueled engines, which have an additional phenomenon to be considered, as the hydrocarbon residues are mainly defined by methane. Indeed, the conversion of the methane residues in the catalyst is subject to a deactivation, not only if a stoichiometric air/fuel ratio is supplied, but also with rich and lean mixtures.

In order to prevent this conversion deactivation, in natural gas fueled engines the air/fuel ratio has to be controlled so as to oscillate around the stoichiometric condition, i.e. between a rich and a lean combustion, with a pre-defined oscillation pattern. Such an oscillating control is commonly named as "wobbling" and, in general, uses a closed loop strategy based on signals emitted by a lambda sensor arranged at the outlet of the engine (e.g. between the engine and the catalyst). In practice, when this lambda sensor detects an oxygen excess in the exhaust gases, a rich combustion is performed; as a consequence, the oxygen level in the exhaust gases progressively decreases; afterwards, when the lambda sensor detects that the oxygen level is too low, the combustion is again switched to a lean mixture, and so on.

This kind of strategy is relatively simple to be implemented, but it requires a difficult calibration in order to obtain the desired behavior of the exhaust after-treatment system, i.e. in terms of trade-off between all the involved emission species, especially after disturbances have occurred, by way of example when a phase after a fuel cut-off has to be managed.

US2015240733A1 discloses a solution of this kind, in which gasoline is used as a fuel. In particular, the air-fuel ratio in the combustion chamber of the engine is controlled so that the oxygen storage amount at the three-way catalyst becomes a value between zero and the maximum oxygen storage amount: preferably, the oxygen storage amount at the three-way catalyst becomes about half of the maximum oxygen storage amount.

Also US2005028517A1 discloses a similar solution, applied when a plurality of catalysts are arranged in the exhaust passage.

US2002078683A1 is another relevant document.

An aim of the present invention is to solve this drawback and to meet the above-mentioned needs in a simple and economic way.

### SUMMARY OF THE INVENTION

The aforementioned aim is reached by a method for controlling fuel supply for a spark ignition internal combustion engine, in particular for a natural gas fueled engine, as claimed in claim 1, by an electronic control unit in which such a method is implemented, according to claim 14, and an assembly according to claim 15.

### BRIEF DESCRIPTION OF DRAWINGS

For a better understanding of the present invention, a preferred embodiment is described in the following, by way of a non-limiting example, with reference to the attached drawings wherein:
- Figure 1 is a diagram showing an assembly implementing a preferred embodiment of the method for controlling fuel supply in spark ignition internal combustion engines, in particular in natural gas fueled engines, according to the present invention;
- Figure 2 shows a set-point diagram having an oscillating pattern according to the method of the present invention;
- Figure 3 shows, in a schematic and simplified manner,
   a model-based estimation block, according to the method of the present invention; and
- Figure 4 is a flowchart showing, in a schematic and simplified manner, some steps of the method of the present invention.

### DETAILED DESCRIPTION OF THE INVENTION

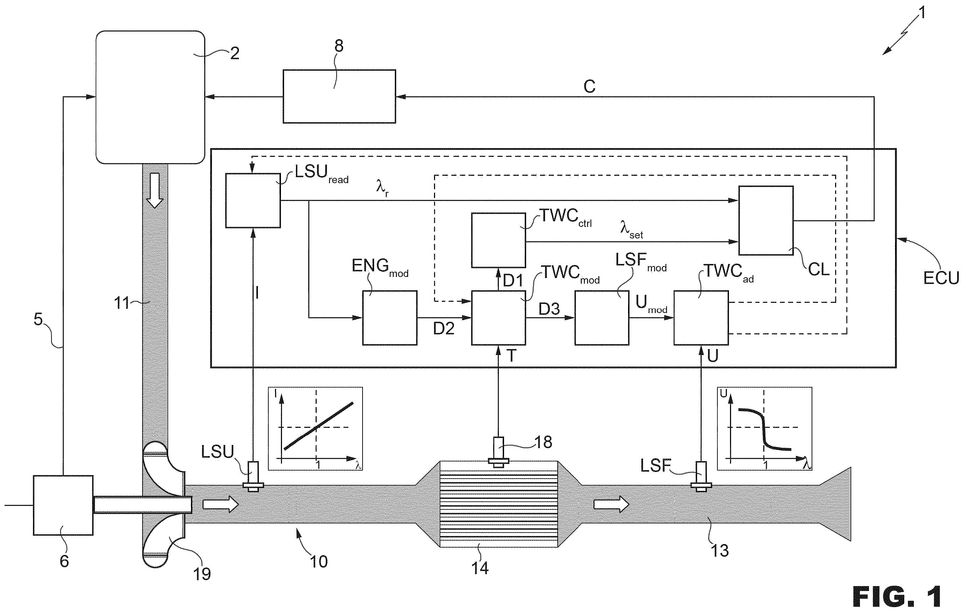

In figure 1, reference number 1 designates, as a whole, a propulsion assembly (diagrammatically and partially shown) comprising a spark ignition internal combustion engine 2 supplied with air and fuel. In particular, such fuel is defined by natural gas. In particular, an air flow is supplied in known manner (e.g. through a line 5 provided with a compressor 6) into a plurality of engine cylinders in response of a throttle command set by a user. On the other hand, the propulsion assembly 1 comprises an injection device 8, known per se and comprising a plurality of fuel injectors controlled by control signals C to inject fuel into the engine cylinders.

The control signals C are emitted, in use, by an electronic control unit (ECU) of the assembly 1, in response of a detected amount of air entering the engine cylinders and on the basis of a control strategy, which is implemented in the ECU and will be described later on.

The assembly 1 further comprises an exhaust after-treatment system 10, in turn comprising: an outlet pipe 11 arranged at an outlet of the engine 2, to collect and channel exhaust gases exiting from the engine cylinders; a tailpipe 13, to discharge the exhaust gases in the external environment; a three-way catalyst 14 arranged between the outlet pipe 11 and the tailpipe 13; a first lambda sensor LSU arranged between the engine cylinders and the catalyst 14 (e.g. at the outlet of the engine 2); and a second lambda sensor LSF arranged at the tailpipe 13.

Conveniently, a sensor 18 is added to detect operating parameters (e.g. temperatures) of the exhaust gases inside the catalyst 14. According to a variant, the sensor 18 is not provided, and the same operating parameters can be estimated by additional calculation on the ECU (e.g. by a thermal model of the gas flow and of the catalyst),

In the shown preferred embodiment, a gas turbine 19 is provided in the outlet pipe 11 so as to operate the compressor 6.

The lambda sensor LSU emits an output signal I, which is indicative of an actual oxygen content in the exhaust gases exiting from the engine 2, and therefore indicative of air/fuel ratio λ of the mixture combusted in the engine cylinders.

In the meantime, the lambda sensor LSF emits an output signal U, which is indicative of an actual oxygen content in the exhaust gases flowing in the tailpipe 13, after the conversion carried out in the catalyst 14, and therefore indicative of a theoretical air/fuel ratio λ that would have produced such exhaust gases.

As diagrammatically shown in figure 1, according to a preferred aspect of the present invention, the lambda sensor LSU is configured in such a manner that the response characteristic curve of the output signal I is linear, as a function of the ratio λ. This kind of lambda sensor is available on the market and, for its measurements, usually takes a reference oxygen value by means of a transducer arranged inside the sensor itself. On the other hand, the lambda sensor LSF is configured in such a manner that the response characteristic curve of the output signal U has a higher sensitivity in a range around the value λ=1 (i.e. around the stoichiometric condition), by way of example in a range of the ratio λ between 0.99 and 1,01. In view of this response curve, this kind of lambda sensor is generally known as a "switch type sensor". It is available on the market and, in general, is more precise and reliable than the sensor LSU in detecting the stoichiometric condition (λ=1), because it usually takes a reference oxygen value by means of a transducer arranged outside the sensor, for its measurements.

The signal I is received by the ECU, which comprises a control block LSUread configured to determine a variable value λr, indicative of the actual air/fuel ratio of the mixture generating the exhaust gases at the sensor LSU, on the basis of the signal I. In particular, the block LSUread converts the signal I (a current value) into an air/fuel ratio value and manages possible compensations necessary for sensor management.

Preferably, the value λr can be corrected by the block LSUread according to a drift adaptation algorithm, as it will be disclosed in detail later on, and corresponds to the air/fuel ratio detected by the sensor LSU if no correction is applied.

The ECU further comprises a control block CL, which receives, as inputs, the value λr and a set-point λset. The block CL emits, as output, the control signals C and is configured so as to compare the value λr and the set-point λset and, therefore, to control the injection device 8 according to a feedback loop control, in a manner that is commonly known.

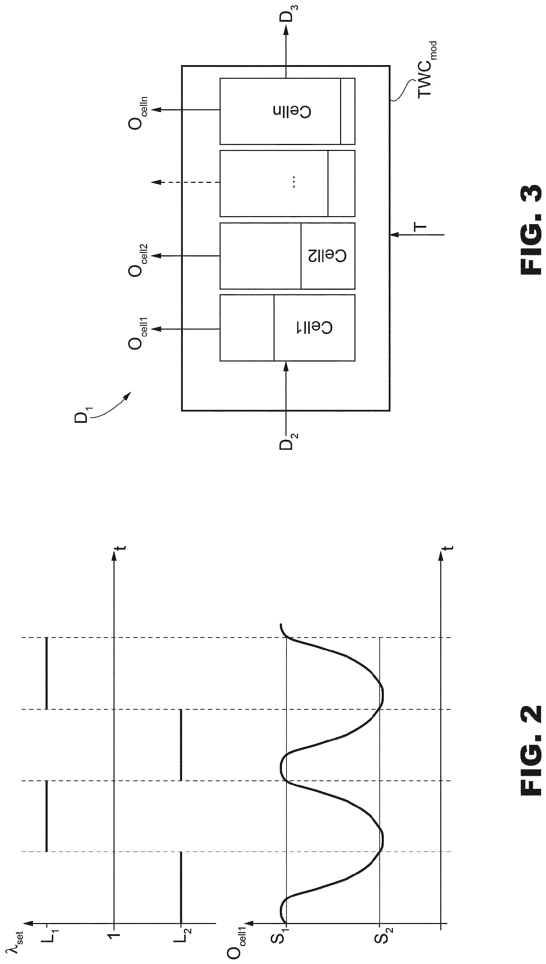

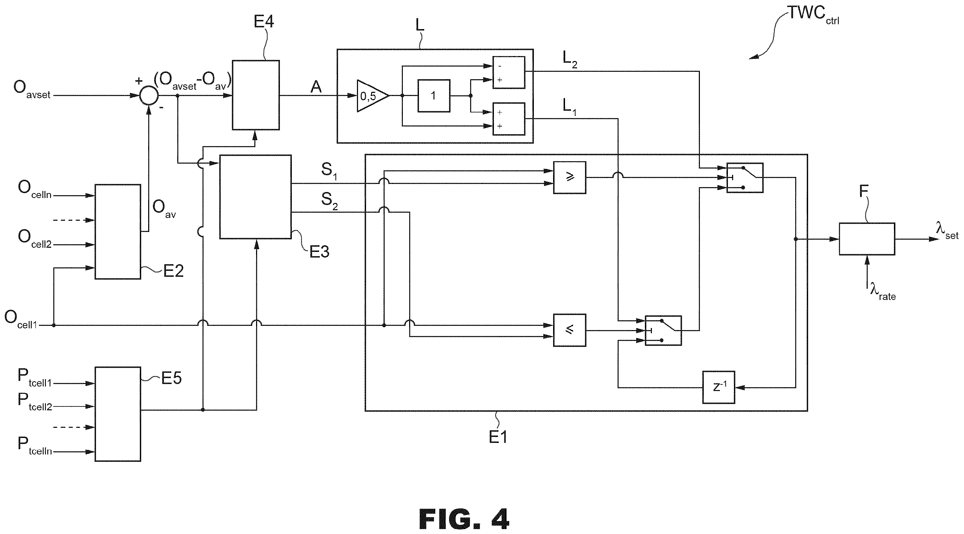

The set-point λset is variable in time (t) and has an oscillating pattern, also known as wobbling pattern. In particular, as schematically shown in figure 2, the wobbling pattern of the set-point λset is defined by an upper constant level L1, higher than 1, and a lower constant level L2, lower than 1. Preferably, L1 and L2 are symmetric values in relation to the stoichiometric conditions λset=1 (block L in figure 4).

With reference to figure 1, switching of the set-point λset from level L1 to level L2, and viceversa, is carried out by an elaboration block TWCctrl in response of estimated data D1 generated by a model-based estimation block TWCmod, which operates in response of estimated data D2 and in response of the operating state in the catalyst 14, which can be estimated as well or, partially, measured by means of dedicated sensors, e.g. temperature sensors.

The estimated data D2 are generated by an engine mathematical model, by way of example a map-based, and linear in parameters, model (estimation block ENGmod). Such model is configured to estimate the exhaust gas composition at the engine outlet (such estimated composition corresponding to the data D2) in response to an input value indicative of the air/fuel ratio of the mixture just combusted in the engine 2 and in response to other available engine parameters that may affect emissions, e.g. engine speed, throttle position, ignition timing, boost pressure etc. Preferably, the above input value indicative of the air/fuel ratio is defined by the value λr outputted by the control block LSUread.

In the meantime, the block TWCmod comprises a kinetic mathematical model of the catalyst 14 and is configured to estimate quantities indicative of the oxygen contents inside the catalyst 14.

In particular, as schematically shown in figure 3, in the model stored in the block TWCmod, the catalyst is modelled as divided in a plurality of cells (Cell1, Cell2, ... Celln), which correspond to, and simulate, respective actual areas in the catalyst 14, such areas (not shown) being arranged in series along the flow direction of the exhaust gases. Each cell is associated with a respective oxygen level (Ocell1, Ocell2, ... Ocelln) indicative of the oxygen content actually stored in the corresponding area of the catalyst 14.

In particular, the oxygen levels of the cells and the oxygen level of the whole modelled catalyst are indicated as a percentage of respective given maximum storage capacities, defined as a function of the features of the real catalyst 14. In particular, the values of such maximum storage capacities (indicated in mol/m3, by way of example) can be set in the model during calibration, at the beginning of the operating conditions of the system 10.

The block TWCmod is configured to simulate the operation of the catalyst 14, to estimate the oxygen levels (Ocell1, Ocell2, ... Ocelln), corresponding to the output data D1, and to estimate the composition of the exhaust gases exiting from the catalyst 14 and flowing along the tailpipe 13. Such estimated composition is generated as output data D3.

The models stored in the blocks ENGmod and TWCmod are not described in detail, as they are commonly known in the art, for controlling gasoline engines, by way of example in the following documents:
- *"*Modelling and control of three-way catalysts", Auckenthaler Theophil S., Doctoral Thesis ETH, 2005;
- *"*A Post-Catalyst Control Strategy Based on Oxygen Storage Dynamics", Michael Tomforde et al., SAE Internation, 2013;
- *"*Model Based Control of a Three-way Catalyst Based on the Oxygen Storage Level of the Catalyst", Pankaj Kumar and Imad Makki, Ford Motor Company, SAE International, 2017.

As mentioned above, the estimated oxygen levels (Ocell1, Ocell2, ..., Ocelln) are used as inputs in the block TWCctrl, in which a control strategy is implemented so as to determine the set-point λset. Such control strategy is schematically and partially shown in figure 4 and compares a parameter indicative of an oxygen level, estimated for one of the above mentioned cells, with an upper threshold S1 and with a lower threshold S2 (evaluation and switching block E1).

According to the invention, the thresholds S1 and S2 are compared with a parameter indicative of the estimated oxygen level (Ocell1) of the first cell (Cell1), i.e. the cell that is associated with the first area in the catalyst 14 along the flow direction. In particular, such parameter is defined by the estimated oxygen level (Ocell1) of the first cell (Cell1). The choice of the first cell is advantageous because the operating state (e.g. the actual oxygen content) of the corresponding first area is the most responsive to variations in the exhaust gas composition (e.g. to variations in the engine operating conditions).

As shown in figure 2, when the estimated oxygen level Ocell1 gets lower than the threshold S2, the set-point λset is switched to the level L1, so as to bring the engine operating conditions to a lean combustion; if the estimated oxygen level Ocell1 becomes higher than the threshold S1, the set-point λset is switched to the level L2 so as to bring the engine operating conditions to a rich combustion. In this way, the combustion in the engine 2 continuously oscillates between a rich phase and a lean phase.

In more detail, when λset=L1 a lean combustion is set by the block CL controlling the injection device 8 (fig. 1). In these conditions, the exhaust gases exiting from the engine cylinders have an oxygen excess (with respect to the stoichiometric condition). Such oxygen excess is detected by the sensor LSU, so that the value λr is higher than one. In the meantime, this operating condition causes an oxygen accumulation in the areas of the catalyst 14. In response to the value λr, the block TWCmod estimates these increasing oxygen levels in the cells of the model.

In practice, with reference to figure 2, the estimated oxygen level Ocell1 progressively increases, until it reaches the threshold S1. At this point, the set-point λset is switched to the level L2 (block E1), and this switching leads to a rich combustion in the engine cylinders, thanks to the control carried out by block CL.

In these conditions, the exhaust gases exiting from the engine cylinders have an oxygen content lower than the stoichiometric condition. The reduction in the oxygen content of the exhaust gases is detected by the sensor LSU, so that the value λr becomes lower than 1. In the meantime, as a consequence of the rich combustion, the oxygen stored in the areas of the catalyst 14 decreases. Then, in response to the value λr, the block TWCmod estimates the reduction in the oxygen levels of the cells in the model. The estimated oxygen level Ocell1 progressively decreases, until it reaches again the threshold S2. At this point, the set-point λset is switched to the level L1 (block E1), so that the cycle of lean phase and rich phase is repeated.

From the above, it should be clear that the block E1 controls the timing of the wobbling pattern, in response to the two thresholds S1 and S2, and that the catalyst dynamics, in terms of oxygen storage, follow the wobbling pattern of the set-point λset. In particular, this kind of operation avoids possible dynamic deactivation in the conversion of the methane residues in the system 10, when natural gas is used as fuel.

With reference to figure 4, preferably, a filtering block F can be provided downstream of the block E1, so as to possibly limit the rate of the changes between levels L1 and L2 in the wobbling pattern, as a function of an input or a given threshold (λrate).

According to the preferred control strategy implemented in the block TWCctrl, the thresholds S1 and S2 are adjusted in response to an average oxygen storage (Oav) in the catalyst (control block E3). The average oxygen storage Oav is calculated from the estimated oxygen levels (Ocell1, Ocell2, etc.) of all the cells, preferably as a weighted average (calculation block E2) and, then, is compared with a given set-point Oavset. As an optimal operation is reached when the oxygen levels in the catalyst 14 are at an intermediate value, e.g. at a value of 50% (in relation to a given maximum storage capacity), the set-point Oavset can be set by default at this 50% value. In steady state conditions, the thresholds S1 and S2 are symmetric in relation to the set-point Oavset, i.e. S1 is slightly higher than 50% (equal to 55%, by way of example) and the threshold S2 is slightly lower than 50% (equal to 45%, by way of example).

The actual and estimated oxygen storage values are, obviously, variable according to the operating conditions. If the average oxygen storage Oav is lower than the set-point Oavset, both the thresholds S1 and S2 are increased (block E3), so as to reach a relatively high oxygen level in the first area/cell and afterwards accumulate oxygen in the areas/cells downstream of the first one; if the average oxygen storage Oav is higher than the set-point Oavset, both the thresholds S1 and S2 are decreased (block E3), so as to reach a relatively low oxygen level in the first area/cell and afterwards reduce the oxygen content in the areas/cells downstream of the first one.

In this way, the behavior of the system 10 is closer to the optimal operation, i.e. it is able to automatically adapt to different engine operating conditions.

Preferably, the adjustment strategy implemented in block E3 to increase/decrease the thresholds S1 and S2 comprises a proportional-integrative control, as a function of the difference between the average oxygen storage Oav and the set-point Oavset. In other words, the position of the window defined by the two thresholds S1, S2 is moved up or down as a function of the above mentioned difference.

By way of example, before starting the engine 2, the oxygen storage in the catalyst 14 is near to 0%, so that it is necessary to charge oxygen into the catalyst areas/cells. For this purpose, the thresholds S1 and S2 are set by block E3 to relatively high values, e.g. to respective given maximum values (95% and 85%, by way of example). As a consequence, thanks to the control carried out by block E1, the oxygen level (Ocell1) in the first area/cell is brought to an average value between S1 and S2 (e.g. 90%). Afterwards, the oxygen level (Ocell1) begins to oscillate around such average value, and in the meantime the oxygen levels (Ocell2, ... Ocelln) in the following areas/cells increase.

In an analogous manner, after a fuel cut-off phase the oxygen storage in the catalyst 14 is at high levels, i.e. the average oxygen storage Oav is higher than the set-point Oavset. In this conditions, the thresholds S1 and S2 are set by block E3 to very low values, e.g. to respective given minimum values (5% and 15%, by way of example), so as to cause a rich combustion, until the oxygen level Ocell1 in the first cell Cell1 reaches an equilibrium at an average value between S1 and S2 (e.g. 15%), thanks to the control carried out by block E1. Afterwards, while the oxygen level Ocell1 in the first area/cell oscillates around such average value, the oxygen levels (Ocell2, ... Ocelln) in the following areas/cells decrease.

In this way, the set-point Oavset is reached in a relatively fast manner.

Preferably, also the amplitude A of the wobbling pattern between the rich and the lean phase (A=L1-L2) is adjusted (control block E4), as a function of the difference between the average oxygen storage Oav and the set-point Oavset. In this way, if the data D1 estimated by the model are close to the desired storage, the levels L1 and L2 are brought closer to each other, so as to set a wobbling pattern very near to the stoichiometric condition. The amplitude A can be reduced up to a given minimum value higher than zero (by way of example of 0,04, corresponding to a wobbling pattern having L1=1,02 and L2=0,98). This kind of adjustment prevents emission peaks, also on aged systems, and is particularly beneficial in avoiding production of ammonia (NH3) in the catalyst 14.

On the other hand, when the average oxygen storage Oav is relatively far from the set-point Oavset, the amplitude A is increased to a relatively high value, up to a given maximum value (by way of example of 0,2, corresponding to a wobbling pattern having L1=1,1 and L2=0,9) . In this way, a faster recovery from fuel cut-offs, misfuels and other disturbances is allowed.

More preferably, the strategy implemented in the block TWCctrl further comprises a control block E5 to bring the thresholds S1 and S2 and the amplitude A to respective given maximum values when an estimated palladium oxidation - determined on the basis of further outputs (Ptcell1, Ptcell2, ..., Ptcelln) of the model stored in the block TWCmod - reaches a given threshold.

In steady state conditions, and the oxygen storage is in equilibrium, the composition of the exhaust gasses at the tailpipe 13 is ideally "stoichiometric", i.e. the sensor LSF should detect λ=1. Every slight deviation from λ=1 is immediately reflected in the measurement of the sensor LSF, thanks to its response curve having high sensitivity around the stoichiometry. According to a preferred aspect of the present invention, the sensor LSF is used to detect and compensate possible drifts between the output data D1 of the model and the real conditions.

The main phenomena that can cause drifts/inaccuracies are:
- possible errors in λr (i.e. the air/fuel ratio value, inputted into the models, is different from the real one), e.g. the measurement of the sensor LSU is not precise enough;
- catalyst ageing.

For the first phenomenon, a drift adaptation algorithm is implemented, as briefly mentioned above. For this purpose, the data D3 (calculated in the block TWCmod on the basis of the model) are inputted into a model-based estimation block (LSFmod), which comprises an empiric model of the sensor LSF, configured to simulate the operation of the sensor LSF. In other words, the block LSFmod is configured to generate, as output, an estimated signal or predicted signal (Umod) for the measurements that are made (or will be made) by the sensor LSF on the basis of data indicative of the gas composition at the tailpipe (data D3).

By way of example, this empiric model is based on a correlation between the exhaust gas composition and the sensor signal. This approach is known in the art, by way of example from the already mentioned reference: "Modelling and control of three-way catalysts", Auckenthaler Theophil S., Doctoral Thesis ETH, 2005.

In steady state conditions, assuming that the sensors LSU and LSF were reading exactly the actual λ, there should be a direct correlation between the average values of the two measurements carried out by the sensors LSU and LSF, on the basis of the conversion performed in the catalyst 14 on the gas composition. In other words, the signals Umod and U should substantially correspond to each other.

To check this correspondence, the estimated signal Umod outputted by block LSFmod and the actual signal U of the LSU sensor are elaborated and compared (control block TWCad, fig. 1), so as to evaluate possible mismatches. In other words, the reading of the sensor LSF is taken as a reference to recognize a drift (the choice of this reference is effective, as the sensor LSF is more reliable around stoichiometry than the sensor LSU).

In particular, respective average values of the signals Umod and U are calculated and compared with each other (block TWCad). If there is a mismatch between such average values, or this mismatch is higher than a given threshold, the estimations carried out by the model-based strategy are not precise, and a correction/adaptation is needed. According to a preferred aspect of the present invention, the drift correction/adaptation is carried out by acting on the reading of the sensor LSU, in order to align the output of the models (signal Umod) with the one of the real sensor LSF.

To extract the information on the average values of the signals U and Umod, preferably the wobbling pattern is exploited. Indeed, in steady state conditions, the wobbling pattern is symmetric and, therefore, the signal U is centered around its average value: this phenomenon implies that it is sufficient to consider a single wobbling period (or a very low number of periods) to calculate the average value of the signals U and Umod, without exploiting any filter on the signals. In other words, the drift adaptation algorithm is triggered at the end of every wobbling period, i.e. the duration of one wobbling period defines the sampling rate, which is variable, to evaluate the actual correspondence between the signals U and Umod. This choice is advantageous, in terms of fast response times, because the wobbling periods are relatively short, in practice (by way of example, between 1 and 3 s).

In particular, once the difference between the two average values has been calculated, a proportional-integrative control is implemented to calculate a correction factor used to correct the reading of the sensor LSU, preferably via a simple multiplication to obtain the corrected value λr. In particular, when comparing the average values of the signals U and Umod, if the outcome of the comparison reveals that sensor LSF detects a richer gas mixture than expected (meaning that the model has drifted towards "lean"), the correction factor in the block LSUread will be brought to be lower than one, i.e. it will cause the corrected value λr to become "richer", until the output data of the model and reality are re-aligned. On the other hand, if the outcome of the comparison between the average values of the signals U and Umod reveals that sensor LSF detects a leaner gas mixture than expected (meaning that the model has drifted towards "rich"), the correction factor in the block LSUread will be higher than one, i.e. it will cause the corrected value λr to become "leaner".

The integrative part of the control calculating the correction factor allows for considering also the history of the past drift events, for a better control.

Preferably, a further adaptation strategy is implemented in block TWCad to correct errors due the catalyst ageing. An aged system shows higher breakthrough and, therefore, its real behavior has higher variations in the conversion outcome and in the gas composition between the rich and the lean phases of the wobbling. To evaluate ageing, a parameter indicative of the signal amplitude for each of the signals Umod and U is determined. Preferably, such parameter comprises, or is defined by, the standard deviation (difference between the average of the squared signal and the square of the averaged signal). Just as explained above for the drift adaptation algorithm, preferably, the values of this parameter are determined over a given sampling time defined by a single wobbling cycle, or a few wobbling cycles, without filtering the signals. If the standard deviation of the signal U becomes higher than the estimated one (extracted from the signal Umod), apart from a possible minimum threshold to be exceeded, it is an indication that the system 10 is ageing. In practice, the oxygen storage capacity of the catalyst 14 is reducing over time.

Preferably, this ageing adaptation algorithm is carried out when there is no substantial drift between the average values of the signals U and Umod, because a drift could cause a more or less noisy signal. In other words, the drift adaptation algorithm has priority over this ageing adaptation or evaluation algorithm: only when possible drifts have been compensated, the ageing adaptation or evaluation is enabled.

Preferably, the ageing adaptation has an output defined by a reduction factor used to cause a reduction in the value of the catalyst maximum storage capacity (this value being set in the model stored in the block TWCmod, as mentioned above) . As an automatic consequence, the above mentioned set-point Oavset reduces.

In particular, to compare the amplitudes of the signals U and Umod and therefore estimate ageing, the ratio between the standard deviations of such signals U and Umod is calculated. Preferably, this ratio is afterwards integrated. The integration allows for considering that the catalyst ageing is a cumulative phenomenon.

Finally, the outcome of this elaboration/comparison is used to determine the reduction factor, defining the above mentioned reduction in the modelled storage maximum capacity.

As an alternative or in combination with the reduction of the maximum storage capacity set in the model, the result of the elaboration, carried out for comparing the values representing the amplitudes of the two signals U and Umod, is used to emit a warning signal to the ECU for diagnosis purposes and/or a warning signal to the driver, indicating that the system 10 is ageing. In other words, this result can be compared with at least one given threshold and, if the threshold is exceeded, the warning is activated. This warning function about ageing could be used also for gasoline fueled engines, e.g. by implementing the wobbling pattern control for a limited period of time so as to obtain the oscillating signals U and Umod and compare their amplitudes (standard deviations).

Clearly, different elaboration steps can be performed to evaluate if the system is ageing, i.e. if the amplitude of the oscillating signal U becomes dangerously higher than the amplitude of the oscillating estimated signal Umod. By way of example: a difference between the two standard deviations can be calculated, instead of calculating their ratio; and/or a given threshold has to be exceeded before actually setting a correction factor to reduce the maximum storage capacity of the ageing adaptation.

In view of the foregoing, the advantages of the control method according to the invention are apparent.

Indeed, from preliminary testing results obtained during software simulation, once the models are calibrated, the emission trade-off (between NOx/HC/CO/NH3) can be easily controlled. Furthermore, without dedicated strategies, the control is able to keep and/or reach the desired conditions during transient operations, and to restore it in case of disturbances (in particular after a fuel cut-off, a misfuel or a misfire) . This improves the performances in terms of emissions in natural gas engines.

Furthermore, the presence of model-based algorithms, together with the switch type lambda sensor LSF, can be effectively used to detect and correct model drifts and/or catalyst ageing, by comparing the oscillating signal Umod and the real sensor measurement signal U.

The catalyst 14 is operated closer to the best efficiency possible, in relation to prior art solutions applied to natural gas fueled engines, and do not need hardware modifications (e.g. increasing the catalyst size or the precious metals charge) or the introduction of additional devices (such as SCR systems).

It is clear that modifications can be made to the described method, which do not extend beyond the scope of protection defined by the attached claims.

For example, a different drift adaptation algorithm can be provided to eliminate possible drifts, in particular by correcting the value λr in the block LSUread.

## Claims

1. A method for controlling fuel supply for an assembly (1) comprising:
a) a spark ignition internal combustion engine (2);
b) an exhaust after-treatment system (10) comprising a three-way catalyst (14);
c) a first lambda sensor (LSU) arranged upstream of said catalyst (14), considering a flow direction of exhaust gases in said catalyst (14); and
d) an injection device (2) supplying fuel to said engine (2); the method comprising the steps of:
- controlling said injection device (8) according to a first set-point (λset), indicative of a desired air/fuel ratio during combustion of a mixture of fuel and air in said engine (2);
- determining an air/fuel ratio value (λr) indicative of an actual air/fuel ratio, on the basis of a measurement of said first lambda sensor (LSU);
- simulating said catalyst (14) by a catalyst model comprising a plurality of cells (Cell1, Cell2, ..., Celln), which correspond to respective areas arranged in series in said catalyst (14) along said flow direction and are associated to respective oxygen levels (Ocell1, Ocell2, ... Ocelln); said cells comprising a first cell (Cell1) corresponding to a first area of said areas in said catalyst (14) along said flow direction;
- estimating said oxygen levels (Ocell1, Ocell2, ... Ocelln) respectively in the cells of said catalyst model, at least on the basis of said air/fuel ratio value (λr);
the method **characterized by** further comprising the steps of:
- setting a wobbling pattern for said first set-point (λset) so as to operate said engine (2) with alternating lean combustion phases and rich combustion phases;
- setting an upper threshold (S1) and a lower threshold (S2);
- comparing said upper and lower thresholds (S1,S2) with a first parameter (Ocell1) indicative only of the estimated oxygen level of said first cell (Cell1);
said wobbling pattern being set so as to bring the engine (2) to the lean combustion phase when said first parameter (Ocell1) becomes lower than said lower threshold (S2) and to the rich combustion phase when said first parameter (Ocell1) becomes higher than said upper threshold (S1).

2. The method according to claim 1, **characterized by** further comprising the steps of:
- determining an average oxygen storage (Oav), indicative of an average content of oxygen in said catalyst (14);
- comparing said average oxygen storage (Oav) with a second set-point (Oavset), indicative of a desired average oxygen content in said catalyst (14);
- increasing both the upper and lower thresholds (S1,S2) if the average oxygen storage (Oav) is lower than the second set-point (Oavset), and decreasing both the upper and lower thresholds (S1,S2) if the average oxygen storage (Oav) is higher than the second set-point (Oavset).

3. The method according to claim 2, **characterized in that** increasing and decreasing the upper and lower thresholds (Sa,S2) are carried out by a proportional-integrative control.

4. The method according to anyone of the previous claims, **characterized in that** said wobbling pattern has an amplitude (A), the method comprising the steps of:
a) determining an average oxygen storage (Oav), indicative of an average content of oxygen in said catalyst;
b) comparing said average oxygen storage (Oav) with a second set-point (Oavset), indicative of a desired average oxygen content in said catalyst (14);
c) determining said amplitude (A) as a function of the difference between said average oxygen storage (Oav) and said second set-point (Oavset).

5. The method according to claim 4, **characterized by** increasing said amplitude (A) as said difference increases.

6. The method according to claim 2 or 4, **characterized in that** the average oxygen storage (Oav) is determined by calculating an average of all the estimated oxygen levels (Ocell1, Ocell2, ... Ocelln) .

7. The method according to anyone of the previous claims, **characterized in that** said wobbling pattern is defined by a constant upper level (L1), to bring the engine to the lean combustion phase, and by a lower constant level (L2), to bring the engine to the rich combustion phase; said upper and lower levels (L1,L2) being symmetric with respect to a stoichiometric condition.

8. The method according to anyone of the previous claims, wherein a second lambda sensor (LSF) is provided downstream of said catalyst (14) considering said flow direction; the method being **characterized by** further comprising the steps of:
a) receiving an actual output signal (U) generated by said second lambda sensor (LSF);
b) simulating said second lambda sensor (LSF) by a sensor model;
c) generating an estimated output signal (Umod) in said sensor model, on the basis of data (D3) outputted by said catalyst model;
d) comparing said actual output signal (U) with said estimated output signal (Umod), so as to evaluate possible inaccuracies.

9. The method according to claim 8, **characterized in that** said actual output signal (U) and said estimated output signal (Umod) are compared over a given sampling time that is higher than, or equal to, a period of the wobbling pattern.

10. The method according to claim 8 or 9, **characterized by** comprising the steps of:
a) determining a signal average value, for each of said actual output signal (U) and estimated output signal (Umod);
b) comparing the two signal average values with each other, so as to determine a correction factor as a function of the comparison;
c) determining said air/fuel ratio value (λr) on the basis of the measurement of said first lambda sensor (LSU) and on the basis of said correction factor.

11. The method according to claim 10, **characterized in that** said correction factor is determined by a proportional-integrative control.

12. The method according to anyone of claims 8 to 11, **characterized by** comprising the steps of:
a) determining, for each of said actual output signal (U) and estimated output signal (Umod), a second parameter indicative of a signal amplitude;
b) emitting a warning signal if the second parameter of said actual output signal (U) is higher than the second parameter of said estimated output signal (Umod).

13. The method according to anyone of claim 8 to 12, **characterized in that** the comparing step comprises:
a) determining, for each of said actual output signal (U) and estimated output signal (Umod), a second parameter indicative of a signal amplitude;
b) reducing a maximum oxygen storage capacity, set in said catalyst model, if the second parameter of said actual output signal (U) is higher than the second parameter of said estimated output signal (Umod).

14. An electronic control unit (ECU) for an assembly (1) comprising:
a) a spark ignition internal combustion engine (2);
b) an exhaust after-treatment system (10) comprising a three-way catalyst (14);
c) a first lambda sensor (LSU) arranged upstream of said catalyst (14), considering a flow direction of exhaust gases in said catalyst (14); and
d) an injection device (2) supplying fuel to said engine (2); the electronic control unit (ECU) being configured to carry out the method according to anyone of the previous claims.

15. An assembly comprising:
a) a spark ignition internal combustion engine (2);
b) an exhaust after-treatment system (10) comprising a three-way catalyst (14);
c) a first lambda sensor (LSU) arranged upstream of said catalyst (14), considering a flow direction of exhaust gases in said catalyst (14);
d) an injection device (2) suitable to supply fuel to said engine (2);
e) an electronic control unit (ECU) according to claim 14;
f) a second lambda sensor (LSF) arranged downstream of said catalyst (14);
said first lambda sensor (LSU) having a linear response curve, and the second lambda sensor (LSF) having a response curve with a higher sensitivity in a range around the stoichiometric condition.

## Patentansprüche

1. Verfahren zum Steuern der Kraftstoffversorgung für eine Baueinheit (1), die Folgendes umfasst:
a) eine fremdgezündete Brennkraftmaschine (2);
b) ein Abgasnachbehandlungssystem (10), das einen Dreiwegekatalysator (14) umfasst;
c) einen ersten Lambdasensor (LSU), der unter Berücksichtigung einer Strömungsrichtung von Abgasen im Katalysator (14) stromaufwärts des Katalysators (14) angeordnet ist; und
d) eine Einspritzvorrichtung (2), die der Kraftmaschine (2) Kraftstoff zuführt; wobei
das Verfahren die folgenden Schritte umfasst:
- Steuern der Einspritzvorrichtung (8) gemäß einem ersten Sollwert (λset), der ein gewünschtes Luft/Kraftstoff-Verhältnis während der Verbrennung eines Gemischs von Kraftstoff und Luft in der Kraftmaschine (2) angibt;
- Bestimmen eines Luft/Kraftstoff-Verhältniswerts (λr), der ein tatsächliches Luft/Kraftstoff-Verhältnis angibt, auf der Grundlage einer Messung des ersten Lambdasensors (LSU);
- Simulieren des Katalysators (14) durch ein Katalysatormodell, das mehrere Zellen (Cell1, Cell2, ..., Celln) umfasst, die jeweiligen Flächen entsprechen, die in Reihe im Katalysator (14) in der Strömungsrichtung angeordnet sind und jeweiligen Sauerstoffpegeln (Ocell1, Ocell2, ..., Ocelln) zugeordnet sind; wobei die Zellen eine erste Zelle (Cell1) umfassen, die einer ersten Fläche der Flächen im Katalysator (14) in der Strömungsrichtung entspricht; und
- Schätzen der Sauerstoffpegel (OCell1, Ocell2, ..., Ocelln) jeweils in den Zellen des Katalysatormodells mindestens auf der Grundlage des Luft/Kraftstoff-Verhältniswerts (λr); wobei
das Verfahren ferner durch die folgenden Schritte gekennzeichnet ist
- Setzen eines Pendelmusters für den ersten Sollwert (λset), um die Kraftmaschine (2) abwechselnd mit mageren Verbrennungsphasen und fetten Verbrennungsphasen zu betreiben;
- Setzen eines oberen Schwellenwerts (S1) und eines unteren Schwellenwerts (S2) und
- Vergleichen des oberen und des unteren Schwellenwerts (S1, S2) mit einem ersten Parameter (OCell1), der lediglich den geschätzten Sauerstoffpegel der ersten Zelle (Cell1) angibt; wobei
das Pendelmuster derart gesetzt wird, dass es die Kraftmaschine (2) zur mageren Verbrennungsphase bringt, wenn der erste Parameter (OCell1) kleiner als der untere Schwellenwert (S2) ist, und zur fetten Verbrennungsphase bringt, wenn der erste Parameter (OCell1) größer als der obere Schwellenwert (S1) ist.

2. Verfahren nach Anspruch 1, ferner **gekennzeichnet durch** die folgenden Schritte:
- Bestimmen einer durchschnittlichen Sauerstoffeinlagerung (Oav), die einen durchschnittlichen Gehalt von Sauerstoff im Katalysator (14) angibt;
- Vergleichen der durchschnittlichen Sauerstoffeinlagerung (Oav) mit einem zweiten Sollwert (Oavset), der einen gewünschten durchschnittlichen Sauerstoffgehalt im Katalysator (14) angibt; und
- Erhöhen sowohl des oberen als auch des unteren Schwellenwerts (S1, S2), wenn die durchschnittliche Sauerstoffeinlagerung (Oav) kleiner als der zweite Sollwert (Oavset) ist, und Verringern sowohl des oberen als auch des unteren Schwellenwerts (S1, S2), wenn die durchschnittliche Sauerstoffeinlagerung (Oav) größer als der zweite Sollwert (Oavset) ist.

3. Verfahren nach Anspruch 2, **dadurch gekennzeichnet, dass** das Erhöhen und das Verringern des oberen und des unteren Schwellenwerts (Sa, S2) durch eine Proportional-Integral-Steuerung ausgeführt werden.

4. Verfahren nach einem der vorhergehenden Ansprüche, **dadurch gekennzeichnet, dass** das Pendelmuster eine Amplitude (A) besitzt, wobei das Verfahren die folgenden Schritte umfasst:
a) Bestimmen einer durchschnittlichen Sauerstoffeinlagerung (Oav), die einen durchschnittlichen Gehalt von Sauerstoff im Katalysator angibt;
b) Vergleichen der durchschnittlichen Sauerstoffeinlagerung (Oav) mit einem zweiten Sollwert (Oavset), der einen gewünschten durchschnittlichen Sauerstoffgehalt im Katalysator (14) angibt; und
c) Bestimmen der Amplitude (A) als eine Funktion der Differenz zwischen der durchschnittlichen Sauerstoffeinlagerung (Oav) und dem zweiten Sollwert (Oavset).

5. Verfahren nach Anspruch 4, **gekennzeichnet durch** Erhöhen der Amplitude (A), wenn die Differenz zunimmt.

6. Verfahren nach Anspruch 2 oder 4, **dadurch gekennzeichnet, dass** die durchschnittliche Sauerstoffeinlagerung (Oav) durch Berechnen eines Durchschnitts von allen geschätzten Sauerstoffpegeln (OCell1, Ocell2, ..., Ocelln) bestimmt wird.

7. Verfahren nach einem der vorhergehenden Ansprüche, **dadurch gekennzeichnet, dass** das Pendelmuster durch einen konstanten oberen Pegel (L1), um die Kraftmaschine zur mageren Verbrennungsphase zu bringen, und durch einen unteren konstanten Pegel (L2), um die Kraftmaschine zur fetten Verbrennungsphase zu bringen, definiert ist; wobei der obere und der untere Pegel (L1, L2) in Bezug auf einen stöchiometrischen Zustand symmetrisch sind.

8. Verfahren nach einem der vorhergehenden Ansprüche, wobei ein zweiter Lambdasensor (LSF) unter Berücksichtigung der Strömungsrichtung stromabwärts des Katalysators (14) vorgesehen ist und das Verfahren ferner durch die folgenden Schritte gekennzeichnet ist:
a) Empfangen eines tatsächlichen Ausgangssignals (U), das durch den zweiten Lambdasensor (LSF) erzeugt wird;
b) Simulieren des zweiten Lambdasensors (LSF) durch ein Sensormodell;
c) Erzeugen eines geschätzten Ausgangssignals (Umod) im Sensormodell auf der Grundlage von Daten (D3), die durch das Katalysatormodell ausgegeben werden; und
d) Vergleichen des tatsächlichen Ausgangssignals (U) mit dem geschätzten Ausgangssignal (Umod), um mögliche Ungenauigkeiten zu bewerten.

9. Verfahren nach Anspruch 8, **dadurch gekennzeichnet, dass** das tatsächliche Ausgangssignal (U) und das geschätzte Ausgangssignal (Umod) über eine gegebene Probenentnahmezeit verglichen werden, die größer oder gleich einem Zeitraum des Pendelmusters ist.

10. Verfahren nach Anspruch 8 oder 9, **gekennzeichnet durch** die folgenden Schritte:
a) Bestimmen eines Signaldurchschnittswerts sowohl für das tatsächliche Ausgangssignal (U) als auch das geschätzte Ausgangssignal (Umod);
b) Vergleichen der zwei Signaldurchschnittswerte miteinander, um einen Korrekturfaktor als eine Funktion des Vergleichs zu bestimmen; und
c) Bestimmen des Luft/Kraftstoff-Verhältniswerts (λr) auf der Grundlage der Messung des ersten Lambdasensors (LSU) und auf der Grundlage des Korrekturfaktors.

11. Verfahren nach Anspruch 10, **dadurch gekennzeichnet, dass** der Korrekturfaktor durch eine Proportional-Integral-Steuerung bestimmt wird.

12. Verfahren nach einem der Ansprüche 8 bis 11, **gekennzeichnet durch** die folgenden Schritte:
a) Bestimmen sowohl für das tatsächliche Ausgangssignal (U) als auch das geschätzte Ausgangssignal (Umod) eines zweiten Parameters, der eine Signalamplitude angibt; und
b) Abstrahlen eines Warnsignals, wenn der zweite Parameter des tatsächlichen Ausgangssignals (U) größer als der zweite Parameter des geschätzten Ausgangssignals (Umod) ist.

13. Verfahren nach einem der Ansprüche 8 bis 12, **dadurch gekennzeichnet, dass** der Vergleichsschritt Folgendes umfasst:
a) Bestimmen sowohl für das tatsächliche Ausgangssignal (U) als auch das geschätzte Ausgangssignal (Umod) eines zweiten Parameters, der eine Signalamplitude angibt; und
b) Verringern einer maximalen Sauerstoffeinlagerungskapazität, die im Katalysatormodell gesetzt ist, wenn der zweite Parameter des tatsächlichen Ausgangssignals (U) größer als der zweite Parameter des geschätzten Ausgangssignals (Umod) ist.

14. Elektronische Steuereinheit (ECU) für eine Baueinheit (1), die Folgendes umfasst:
a) eine fremdgezündete Brennkraftmaschine (2);
b) ein Abgasnachbehandlungssystem (10), das einen Dreiwegekatalysator (14) umfasst;
c) einen ersten Lambdasensor (LSU), der unter Berücksichtigung einer Strömungsrichtung von Abgasen im Katalysator (14) stromaufwärts des Katalysators (14) angeordnet ist; und
d) eine Einspritzvorrichtung (2), die Kraftstoff zur Kraftmaschine (2) liefert; wobei
die elektronische Steuereinheit (ECU) konfiguriert ist, das Verfahren nach einem der vorhergehenden Ansprüche auszuführen.

15. Baueinheit, die Folgendes umfasst:
a) eine fremdgezündete Brennkraftmaschine (2);
b) ein Abgasnachbehandlungssystem (10), das einen Dreiwegekatalysator (14) umfasst;
c) einen ersten Lambdasensor (LSU), der unter Berücksichtigung einer Strömungsrichtung von Abgasen im Katalysator (14) stromaufwärts des Katalysators (14) angeordnet ist;
d) eine Einspritzvorrichtung (2), die geeignet ist, Kraftstoff zur Kraftmaschine (2) zu liefern;
e) eine elektronische Steuereinheit (ECU) nach Anspruch 14 und
f) einen zweiten Lambdasensor (LSF), der stromabwärts des Katalysators (14) angeordnet ist; wobei
der erste Lambdasensor (LSU) eine geradlinige Antwortkurve besitzt und der zweite Lambdasensor (LSF) eine Antwortkurve mit einer höheren Empfindlichkeit in einem Bereich in der Nähe des stöchiometrischen Zustands besitzt.

## Revendications

1. Procédé de commande d'alimentation en carburant d'un ensemble (1) comprenant :
a) un moteur à combustion interne à allumage par étincelle (2) ;
b) un système de post-traitement des gaz d'échappement (10) comprenant un catalyseur à trois voies (14) ;
c) une première sonde lambda (LSU) agencée en amont dudit catalyseur (14), compte tenu d'une direction d'écoulement des gaz d'échappement dans ledit catalyseur (14) ; et
d) un dispositif d'injection (2) alimentant ledit moteur (2) en carburant ;
le procédé comprenant les étapes suivantes :
- commander ledit dispositif d'injection (8) selon un premier point de consigne (Xset) indiquant un rapport air/carburant souhaité pendant la combustion d'un mélange de carburant et d'air dans ledit moteur (2) ;
- déterminer une valeur de rapport air/carburant (Xr) indiquant un rapport air/carburant réel, sur la base d'une mesure de ladite première sonde lambda (LSU) ;
- simuler ledit catalyseur (14) par un modèle de catalyseur comprenant une pluralité de cellules (Cell1, Cell2, ..., Celln), qui correspondent à des zones respectives agencées en série dans ledit catalyseur (14) le long de ladite direction d'écoulement et qui sont associées à des niveaux d'oxygène (Ocell1, Ocell2, ..., Ocelln) respectifs ; lesdites cellules comprenant une première cellule (Cell1) correspondant à une première zone desdites zones dans ledit catalyseur (14) le long de ladite direction d'écoulement ;
- estimer lesdits niveaux d'oxygène (Ocell1, Ocell2, ..., Ocelln) respectivement dans les cellules dudit modèle de catalyseur, en se basant au moins sur ladite valeur de rapport air/carburant (Xr) ;
le procédé étant **caractérisé en ce qu'**il comprend en outre les étapes suivantes :
- définir un motif d'oscillation pour ledit premier point de consigne (Xset) de manière à faire fonctionner ledit moteur (2) à une alternance de phases de combustion pauvre et de phases de combustion riche ;
- définir un seuil supérieur (S1) et un seuil inférieur (S2) ;
- comparer lesdits seuils supérieur et inférieur (S1, S2) à un premier paramètre (Ocell1) indiquant uniquement le niveau d'oxygène estimé de ladite première cellule (Cell1) ;
ledit motif d'oscillation étant défini de manière à amener le moteur (2) à la phase de combustion pauvre lorsque ledit premier paramètre (Ocell1) devient inférieur audit seuil inférieur (S2), et à la phase de combustion riche lorsque ledit premier paramètre (Ocell1) devient supérieur audit seuil supérieur (S1).

2. Procédé selon la revendication 1, **caractérisé en ce qu'**il comprend en outre les étapes suivantes :
- déterminer un stockage moyen d'oxygène (Oav), indiquant une teneur moyenne en oxygène dans ledit catalyseur (14) ;
- comparer ledit stockage moyen d'oxygène (Oav) à un deuxième point de consigne (Oavset) indiquant une teneur moyenne en oxygène souhaitée dans ledit catalyseur (14) ;
- augmenter chacun des seuils supérieur et inférieur (S1, S2) si le stockage moyen d'oxygène (Oav) est inférieur au deuxième point de consigne (Oavset), et diminuer chacun des seuils supérieur et inférieur (S1, S2) si le stockage moyen d'oxygène (Oav) est supérieur au deuxième point de consigne (Oavset).

3. Procédé selon la revendication 2, **caractérisé en ce que** l'augmentation et la diminution des seuils supérieur et inférieur (S1, S2) sont effectuées par une commande proportionnelle-intégrative.

4. Procédé selon l'une quelconque des revendications précédentes, **caractérisé en ce que** ledit motif d'oscillation a une amplitude (A), le procédé comprenant les étapes suivantes :
a) déterminer un stockage moyen d'oxygène (Oav) indiquant une teneur moyenne en oxygène dans ledit catalyseur ;
b) comparer ledit stockage moyen d'oxygène (Oav) à un deuxième point de consigne (Oavset) indiquant une teneur moyenne en oxygène souhaitée dans ledit catalyseur (14) ;
c) déterminer ladite amplitude (A) en fonction de la différence entre ledit stockage moyen d'oxygène (Oav) et ledit deuxième point de consigne (Oavset).

5. Procédé selon la revendication 4, **caractérisé par** l'augmentation de ladite amplitude (A) à mesure que ladite différence augmente.

6. Procédé selon la revendication 2 ou 4, **caractérisé en ce que** le stockage moyen d'oxygène (Oav) est déterminé en calculant une moyenne de tous les niveaux d'oxygène (Ocell1, Ocell2, ..., Ocelln) estimés.

7. Procédé selon l'une quelconque des revendications précédentes, **caractérisé en ce que** ledit motif d'oscillation est défini par un niveau supérieur constant (L1) pour amener le moteur à la phase de combustion pauvre, et par un niveau inférieur constant (L2) pour amener le moteur à la phase de combustion riche ; lesdits niveaux supérieur et inférieur (L1, L2) étant symétriques par rapport à une condition stœchiométrique.

8. Procédé selon l'une quelconque des revendications précédentes, dans lequel une deuxième sonde lambda (LSF) est prévue en aval dudit catalyseur (14) compte tenu de ladite direction d'écoulement ; le procédé étant **caractérisé en ce qu'**il comprend en outre les étapes suivantes :
a) recevoir un signal de sortie réel (U) généré par ladite deuxième sonde lambda (LSF) ;
b) simuler ladite deuxième sonde lambda (LSF) par un modèle de sonde ;
c) générer un signal de sortie estimé (Umod) dans ledit modèle de sonde sur la base de données (D3) délivrées par ledit modèle de catalyseur ;
d) comparer ledit signal de sortie réel (U) audit signal de sortie estimé (Umod), de manière à évaluer d'éventuelles imprécisions.

9. Procédé selon la revendication 8, **caractérisé en ce que** ledit signal de sortie réel (U) et ledit signal de sortie estimé (Umod) sont comparés sur un temps d'échantillonnage donné qui est supérieur ou égal à une période du motif d'oscillation.

10. Procédé selon la revendication 8 ou 9, **caractérisé en ce qu'**il comprend les étapes suivantes :
a) déterminer une valeur moyenne de signal, pour chacun parmi ledit signal de sortie réel (U) et ledit signal de sortie estimé (Umod) ;
b) comparer les deux valeurs moyennes de signal entre elles de manière à déterminer un facteur de correction en fonction de la comparaison ;
c) déterminer ladite valeur de rapport air/carburant (Xr) sur la base de la mesure de ladite première sonde lambda (LSU) et sur la base dudit facteur de correction.

11. Procédé selon la revendication 10, **caractérisé en ce que** ledit facteur de correction est déterminé par une commande proportionnelle-intégrative.

12. Procédé selon l'une quelconque des revendications 8 à 11, **caractérisé en ce qu'**il comprend les étapes suivantes :
a) déterminer, pour chacun parmi ledit signal de sortie réel (U) et ledit signal de sortie estimé (Umod), un deuxième paramètre indiquant une amplitude de signal ;
b) émettre un signal d'avertissement si le deuxième paramètre dudit signal de sortie réel (U) est supérieur au deuxième paramètre dudit signal de sortie estimé (Umod).

13. Procédé selon l'une quelconque des revendications 8 à 12, **caractérisé en ce que** l'étape de comparaison comprend :
a) de déterminer, pour chacun parmi ledit signal de sortie réel (U) et ledit signal de sortie estimé (Umod), un deuxième paramètre indiquant une amplitude de signal ;
b) de réduire une capacité maximale de stockage d'oxygène définie dans ledit modèle de catalyseur si le deuxième paramètre dudit signal de sortie réel (U) est supérieur au deuxième paramètre dudit signal de sortie estimé (Umod).

14. Unité de commande électronique (ECU) pour un ensemble (1) comprenant :
a) un moteur à combustion interne à allumage par étincelle (2) ;
b) un système de post-traitement des gaz d'échappement (10) comprenant un catalyseur à trois voies (14) ;
c) une première sonde lambda (LSU) agencée en amont dudit catalyseur (14), compte tenu d'une direction d'écoulement des gaz d'échappement dans ledit catalyseur (14) ; et
d) un dispositif d'injection (2) alimentant ledit moteur (2) en carburant ;
l'unité de commande électronique (ECU) étant configurée pour mettre en oeuvre le procédé selon l'une quelconque des revendications précédentes.

15. Ensemble comprenant :
a) un moteur à combustion interne à allumage par étincelle (2) ;
b) un système de post-traitement des gaz d'échappement (10) comprenant un catalyseur à trois voies (14) ;
c) une première sonde lambda (LSU) agencée en amont dudit catalyseur (14), compte tenu d'une direction d'écoulement des gaz d'échappement dans ledit catalyseur (14) ;
d) un dispositif d'injection (2) apte à alimenter ledit moteur (2) en carburant ;
e) une unité de commande électronique (ECU) selon la revendication 14 ;
f) une deuxième sonde lambda (LSF) agencée en aval dudit catalyseur (14) ;
ladite première sonde lambda (LSU) ayant une courbe de réponse linéaire, et la deuxième sonde lambda (LSF) ayant une courbe de réponse ayant une sensibilité plus élevée dans une plage autour de la condition stœchiométrique.
